# EUROPEAN PATENT APPLICATION

(11) **EP 2 072 475 A1**
(43) Date of publication of application: **24.06.2009**
(21) Application number: 07765893.8
(22) Date of filing: 31.05.2007
(51) Int. Cl.: C03B 37/01, C04B 35/515

(54) **PROCESS FOR OBTAINING VITREOUS FIBRES FROM SLATE RESIDUES AND OTHER INDUSTRIAL RESIDUES**

(30) Priority: 01.06.2006 ES 200601540
(71) Applicant: UNIVERSIDADE DE SANTIAGO DE COMPOSTELA, 15782 Santiago de Compostela (ES)
(72) Inventor: GUITIAN RIVERA, Francisco, E-15782 Santiago de Compostela (ES); GONZÁLEZ FERNÁNDEZ, Miguel Angel, E-15782 Santiago de Compostela (ES)
(74) Representative: Carpintero Lopez, Francisco
(86) International application number: PCT/ES2007/070108
(87) International publication number: WO 2007/138149

(57) **Abstract**

Process for obtaining vitreous fibers based on the fusion and subsequent fiber-making of mixtures of residues from slate cutting and polishing with other industrial residues for obtaining melted compositions of low viscosity, **characterised in that** the fusion mixture is composed of milled slate residues (50% to 90% by weight), dry red mud from the Bayer process (5% to 35% by weight) and milled mussel shells (5% to 35% by weight) at temperatures between 1200 and 1700ºC. The mixture is melted in a suitable crucible in a gas furnace, conventional electrical furnace, induction furnace, microwave furnace or a solar furnace. The melted mixture is made into fibers either manually or automatically. The melted mass has conventional industrial applications for making vitreous or vitroceramic items, tiles, paving and similar materials by the normal processes of casting, extrusion, thermal recrystallisation and other similar processes.

## Description

Extraction of slate is mostly performed from open cast mines in which useful blocks of this material are extracted from the mineral beds after removal of large quantities of debris. These blocks must be cleaned before being transported to sawing and splitting factories, where plates that are useful in construction and applications such as roofs, pavements, coverings, worktops, etc, are obtained.

More than 95% of the material is eliminated in these operations. Therefore, plates or blocks finally used represent only a few units percent of the total removed from the mineral bed, the remainder being mining residues discarded as rubble. These residues represent one of the most pressing environmental problems in regions with this type of mining, such as, for example, O Barco de Valdeorras, in the Province of Orense, Spain,.

Of this enormous quantity of residues, one part must be considered as "dirty material", that is, formed by slate pieces and dust contaminated by other rocks, shale, vegetable soil, plant residues, etc., while the other part, particularly that coming from the sawing and polishing of blocks, is cleaner, consisting predominantly of dust and small pieces of material. The chemical composition of this dust is variable but characteristic of a rock consisting of clay-type silicates.

**1. Table1.- Typical composition of a slate (percentages).**

| **SiO₂** | **Al₂O₃** | **Fe₂O₃** | **TiO₂** | **CaO** | **MgO** | **K₂O** | **Na₂O** |
|---|---|---|---|---|---|---|---|
| 55-60 | 25-30 | 5 | 1-2 | 2.5 | 2.5 | 3 | 2 |

Attempts have been made in recent years to make use of these types of residues in various applications. Among these can be cited the preparation of artificial floors, light expanded clays, use as aggregates in public building works and especially its use in ceramic products. In 1996, a Spanish patent was published with the title "**Nuevo material cerámico y procedimiento para su fabricación, aplicable para la obtención de losetas, tejas y similares a partir de pizarras y sus residuos**" (New ceramic material and process of manufacture applicable for making paving stones, tiles and similar products from raw slate and residues) (Pat. No. 2112799). A procedure is described in the patent for a classic ceramic process for making bricks and other construction ceramics from slate dust or mixtures of slate with clays. There are other similar patents, such as FR 2572392 or EP59619A.

In 2005, the same signing inventors registered the Spanish patent application with the title: "**Procedimiento para la obtención de vidriados y cristales negros a partir de residuos de pizarra**" (Process for obtaining glazes and black crystals from slate residues).

Similarly, there are more than 80 publications in the international bibliography on the use of slate residues in the most diverse applications.

However, there are no references to the application of these types of materials for making vitreous fibers.

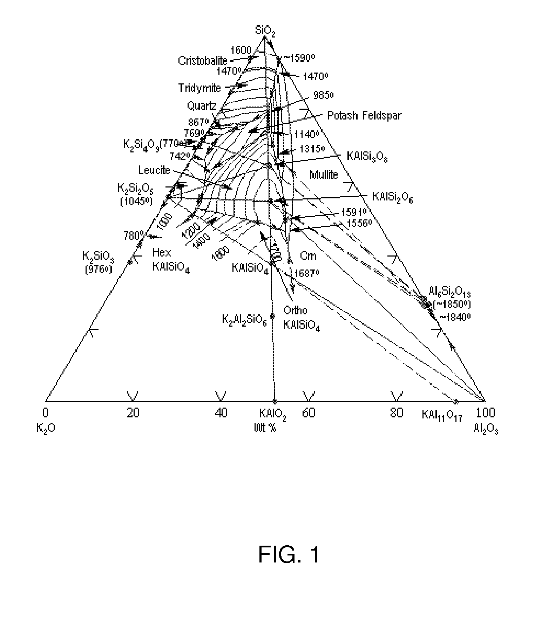

As can be seen in the phase diagram of the SiO₂-Al₂O₃-K₂O system (Figure 1), a typical slate composition starts to melt around 980ºC, the first invariant point is in the primary field of mullite, and finishes the melting process around 1600º - 1700ºC, when it becomes liquid. On cooling, it forms a silicate glass, probably with some crystallisations inside. This temperature is reduced by 200º or more degrees in practice owing to the presence of impurities, such as the oxides of sodium, iron, calcium, etc.

In Galicia, there are also other industrial residues produced in huge amounts, such as the red mud of the Bayer process and mussel shells, the recycling and reuse of which would present clear environmental and social benefits.

**Bayer red mud** is obtained as a residue in the action of a concentrated solution of sodium hydroxide on bauxite at high temperature and pressure. In a typical aluminium production factory, such as the one in Xove, Lugo (Spain), 500,000 tonnes per year of red mud are produced, and stored in a dam. Its chemical composition is 40% to 50% iron oxide, 20% aluminium oxides and around 20% titanium oxide, with smaller quantities of calcium, sodium, silicon and other elements.

The use of **mussels by the mussel preservation industry leaves the shells as the main residue.** In Galicia, between 80,000 and 100,000 tonnes are produced annually. These shells are composed of more than 95% calcium carbonate and also contain proteins, iron, sodium, potassium, magnesium and other elements.

The rock wool industry uses basalt and similar low cost materials as raw material, the composition of which differs from slate residues, which contain less iron oxides and less calcium oxides but more silicon and aluminium oxides than basalts.

Therefore, it is possible to obtain from slate a composition similar to that of basalt, which is easily made fibrillar, by using appropriate mixtures of slate residues, red mud, and mussel shells
The present process uses a mixture of dust or pieces of slate with other industrial residues, such as red mud from the Bayer process and mussel shells, to obtain a very fluid liquid at high temperatures, easily made fibrillar and with applications in construction, thermal and acoustic insulation and other industries.

### Process.

Slate dust, which may or may not contain pieces of various sizes, is milled in a micronizer mill to sizes less than 250 microns. If the residues come from cutting and polishing, they will already be very fine and this step can be eliminated and replaced with a sieving step. If the dust is humid, it must be dried by any of the usual processes, for example by keeping in an oven at 120ºC for 6 or more hours.

Once the dust is ready, it is mixed with the required quantities of dry red mud and milled mussel shells to obtain roughly the desired composition. The mixture is then placed in a refractory crucible and heated until melted in an electric, induction, microwave or other type of furnace. Fusion begins at 1200ºC and the viscosity of the melt reduces significantly and rapidly as the temperature rises to 1600ºC and higher.

Once the fusion is complete, which occurs after a few minutes depending on the power of the furnace and the composition of the starting mixture, the melted liquid can be turned into fibers in an industrial or laboratory equipment or by hand, or can be put into moulds to shape it like a glass.

**Figure 1** shows the phase diagram of the SiO₂-Al₂O₃-K₂O system.

### Example 1.

Slate residues are crushed in a crusher until obtaining a particle size of between 5mm and 50mm. The material is dried in an oven at 120ºC and after 6 hours, 1 kg is weighed out and placed in a crucible to which 20% pulverised, dry red mud at 150ºC and 10% of pulverised mussel shell are added. The resulting product is mixed with a spatula.

The crucible is put into a conventional programmable furnace and the temperature is raised to 1500ºC. The mass melts and becomes fluid at between 1200º -1300ºC. At temperatures of around 1500ºC, the melt can be tipped out and poured into a previously heated metal mould to cast a glass plaque. This glazing is shiny and has a strong black colour.

The melt can be fed at 1500ºC to a fiber-making machine, or made into fibers by hand. Black fibers are made by this process, with variable diameters of the order of 5 to 50 or 100 microns and lengths from a few centimetres to various metres, with the appearance and characteristics similar to those made using melted basalt as the starting material.

### Example 2.

Residues from dry slate sawing and polishing are sieved to between1mm and 10mm sizes; the residue is discarded. The resulting material is dried at 110ºC, mixed with 20% dry red mud and 20% milled mussel shells, and 500 grams of the mixture are placed into a graphite crucible of high density of the appropriate size. The crucible is placed into the head of an induction furnace of sufficient power, and the fusion operation which lasts a few minutes, is started. Once the temperature of 1300º-1500ºC has been reached, the material is completely molten and fluid, with a low viscosity.

The molten mass is fed into the input of a fiber-making machine or is made into fibers manually, obtaining fibers similar to those of example1, but finer, as the thinness of the fiber is determined by the viscosity which in turns depends on the composition of the material at a given temperature: the more iron oxide and calcium oxide, the lower the viscosity.

## Claims

1. Process for obtaining vitreous fibers based on the fusion and subsequent fiber-making of mixtures of residues from slate cutting and polishing with other industrial residues in appropriate quantities for obtaining melted compositions of low viscosity, **characterised in that** the fusion mixture is composed of milled slate residues (50% to 90% by weight), dry red mud from the Bayer process (5% to 35% by weight) and milled mussel shells (5% to 35% by weight) at temperatures between 1200ºC and 1700ºC.

2. Process according to claim 1, **characterised in that** the initial mixture is melted at temperatures between 1200ºC and 1700ºC in a suitable crucible in a gas furnace , conventional electrical furnace, induction furnace, microwave furnace, solar furnace or any similar device, where it reaches homogeneity and low viscosity.

3. Process according to claim 1 and 2, **characterised in that** the melted mixture is made fibrous, manually or automatically, feeding it conventionally to an industrial or laboratory fiber-maker, such as those that are used in the manufacture of glass fiber or rock wool.

4. Process according to claims 1 and 2, in that the molten mass can be used in any of the conventional industrial applications for obtaining vitreous or vitroceramic items, plaques, tiles, paving stones and similar materials by the usual processes of casting, extrusion, thermal recrystallisation and other similar processes.
